# EUROPEAN PATENT APPLICATION

(11) **EP 4 245 887 A1**
(43) Date of publication of application: **20.09.2023**
(21) Application number: 22162399.4
(22) Date of filing: 16.03.2022
(51) Int. Cl.: C25B 1/04, C25B 9/70, C25B 15/08, B01D 53/00

(54) **APPARATUS FOR SEPARATING A PRODUCT GAS FROM AN ELECTROLYSIS MEDIUM**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Debellemaniere, Olivier, 78350 Jouy-En-Josas (FR); Richet, Nicolas, 78350 Jouy-En-Josas (FR); Thieu, Anh Thao, 78350 Jouy-En-Josas (FR); Tovar Ramos, Jorge Ernesto, Hangzhou, 310012 (CN)
(74) Representative: Stang, Stefan

(57) **Abstract**

The invention relates to an apparatus for separating a product gas from an electrolysis medium, and for drying the product gas separated from the electrolysis medium. The apparatus comprises a vessel, defining in its interior a liquid phase part and a gas phase part, whereby the liquid phase part and the gas phase part are immediately adjacent to each other, wherein the liquid phase part is configured to separate the product gas from the electrolysis medium loaded with product gas, to obtain a degassed electrolysis medium, and wherein the gas phase part is configured to dry the product gas separated from the electrolysis medium. The apparatus further comprises an inlet for the supply of the electrolysis medium loaded with product gas to the interior of the vessel, an outlet for discharging the degassed electrolysis medium from the interior of the vessel, and an outlet for discharging the separated product gas from the interior of the vessel. A heat exchanger device comprising heat transfer elements is disposed within the gas phase part of the vessel, and the heat transfer elements is configured for cooling of the product gas separated from the electrolysis medium to effect condensation of condensable components contained in the separated product gas. The invention further relates to an electrolysis arrangement, comprising a combined gas-liquid separator and gas cooling device, wherein said device comprises the apparatus according to the invention.

## Description

### Technical field

The invention relates to an apparatus for separating a product gas, in particular hydrogen, from an electrolysis medium. The invention further relates to an electrolysis arrangement comprising said apparatus.

### Background art

An electrolyser is a device that dissociates a molecule via an electrochemical reaction by means of a direct current, wherein the direct current is supplied to an electrolysis cell or a plurality of electrolysis cells, often referred to as electrolysis cell stack. In the most common applications, the reactant is water and the products are molecular hydrogen and oxygen. In addition to the cell stack, the electrolyser comprises a post-treatment section, in which the product gases are separated from the electrolysis medium.

Typically, this post-treatment section includes a dedicated cooler for condensing liquid from the wet product gas, a gas-liquid separator for separating the (pre-)dried product gas from the liquid, and other devices for separating impurities from the product gas. Those other devices may include, for example in water electrolysis, a device for separating oxygen from hydrogen by means of a catalysed conversion of oxygen impurities with hydrogen into water and subsequently removing the thereby generated water in an absorbent bed.

The use of a dedicated cooler and a gas-liquid separator downstream of the cooler requires a large amount of space and complicates the handling of the condensate produced, as condensates should ideally be returned to the electrolysis medium circuit of the electrolyser without mass losses and energy losses.

It is a general object of the present invention to provide an apparatus which at least in part overcomes the problems of the prior art.

In particular, it is an object of the present invention to provide an apparatus which allows to design a more compact electrolyser compared to known solutions.

It is a further object of the present invention to provide an apparatus which improves recirculation of liquid entrained in the product gas into the electrolysis medium under aspects of mass losses and energy losses.

A contribution to the at least partial solution of at least one of the above mentioned objects is provided by the subject-matter of the independent claims. The dependent claims provide preferred embodiments which contribute to the at least partial solution of at least one of the objects. Preferred embodiments of elements of a category according to the invention shall, if applicable, also be preferred for components of same or corresponding elements of a respective other category according to the invention.

The terms "having", "comprising" or "containing" etc. do not exclude the possibility that further elements, ingredients etc. may be comprised. The indefinite article "a" or "an" does not exclude that a plurality may be present.

In general, at least one of the underlying problems is at least partially solved by an apparatus for separating a product gas from an electrolysis medium, and for drying the product gas separated from the electrolysis medium, comprising
- a vessel, defining in its interior a liquid phase part and a gas phase part, whereby
   the liquid phase part and the gas phase part are immediately adjacent to each other, wherein
   the liquid phase part is configured to separate the product gas from the electrolysis medium loaded with product gas, to obtain a degassed electrolysis medium, and wherein
   the gas phase part is configured to dry the product gas separated from the electrolysis medium;
- an inlet for the supply of the electrolysis medium loaded with product gas to the interior of the vessel;
- an outlet for discharging the degassed electrolysis medium from the interior of the vessel;
- an outlet for discharging the separated product gas from the interior of the vessel;
- a heat exchanger device comprising heat transfer elements disposed within the gas phase part of the vessel, the heat transfer elements being configured for cooling of the product gas separated from the electrolysis medium to effect condensation of condensable components contained in the separated product gas.

The subject matter of the aforementioned apparatus defines a general embodiment of the invention.

The term "dry the product gas" means that the product gas is at least partially freed from entrained liquid from the electrolysis medium.

According to the apparatus of the invention, the devices for separating the product gas from the electrolysis medium and for drying the separated product gas are integrated into one common apparatus. The apparatus according to the invention represents a combined gas-liquid separator and gas cooling device, in which the gas separating section and the gas cooling section are within one common vessel. Thereby, no separated heat exchanger and separator is required, so that a particular compact electrolyser can be designed.

In particular, the vessel defines in its interior a liquid phase part and a gas phase part. In the liquid phase part, product gas is separated from the liquid electrolysis medium, which is loaded with product gas. Said loaded electrolysis medium is a two-phase medium comprising at least the electrolysis medium and the product gas. In the gas phase part of the vessel, the product gas released from the electrolysis medium is dried. Therefore, a heat exchanger device is disposed within the gas phase part of the vessel, to cool the product gas, such that condensation of liquid contained (entrained) in the product gas is caused. The liquid contained or entrained in the product gas is the electrolysis medium or forms part of the electrolysis medium.

According to one embodiment of the apparatus, the apparatus is arranged vertically. According to one embodiment of the apparatus, the gas phase part of the vessel is arranged above the liquid phase part of the vessel. In particular, the gas phase part comprising the heat exchanger device is arranged in an upper part of the vessel. In particular, the liquid phase part forms a lower part of the vessel. Hence, the product gas separated from the loaded electrolysis medium rises upwards, and liquid contained in the uprising product gas is condensed on the surface of the heat transfer elements of the heat exchanger device disposed within the gas phase part of the vessel. Due to the arrangement of the heat exchanger device within the gas phase part of the vessel, in particular within an upper part of the vessel, the condensate subsequently flows back into the liquid phase part of the vessel only with the help of gravity. The apparatus according to the invention therefore provides a particularly simple way of returning the condensate from the product gas to the electrolysis medium circuit of the electrolyser without any appreciable loss of electrolysis medium liquid. Furthermore, there are virtually no energy losses in this process because there are no conduits between a dedicated heat exchanger (condenser) and a dedicated gas-liquid separator.

The electrolysis medium may be any liquid electrolysis medium suitable for electrolysis. The electrolysis medium may also be referred to as "electrolyte". In particular, the electrolysis medium comprises water for performing a water electrolysis. According to an example, the electrolysis medium is deionized water for performing a PEM type electrolysis. According to a further example, the electrolysis medium is a concentrated aqueous KOH solution for performing an alkaline type electrolysis. Thereby, the product gas is preferably hydrogen, as a cathode side product gas of a water electrolysis system. According to a further example, the product gas is oxygen, as an anode side product gas of a water electrolysis system.

According to one embodiment of the apparatus, in addition to the aforementioned inlet and outlets, the apparatus also comprises an inlet for consumed electrolysis medium from a reservoir to compensate for the consumption of electrolysis medium during the electrochemical product formation reaction. The reservoir is in particular a water tank.

Typically, the electrolysis medium withdrawn from a gas-liquid separator is cooled to a specific target temperature before being fed to the electrolysis cell stack. In less compact devices, heat losses occur, for example between the dedicated cooler and the dedicated gas-liquid separator, in the sense that the electrolysis medium heats up unnecessarily in the pipe between the cooler and the gas-liquid separator. According to the present invention, such heat losses do not occur, or are reduced to a minimum. This reduces the need for coolant with respect to the cooler which is arranged upstream of the electrolysis cell stack.

According to one embodiment of the apparatus, the heat transfer elements of the heat exchanger device are configured so that a coolant can flow through them, for indirectly cooling of the product gas separated from the electrolysis medium, and wherein the heat exchanger device has a coolant inlet extending through a wall of the vessel and a coolant outlet extending through the wall of the vessel.

The heat transfer elements of the heat exchanger device are configured so that a coolant can flow through them, for indirectly cooling of the product gas by means of the coolant which flows through the heat transfer elements or can flow through the heat transfer elements.

In principle, the product gas in the vessel can be cooled by purely passive cooling, for example on metal surfaces of the heat transfer elements of the heat exchanger device. However, particularly on an industrial scale, with high flows of electrolysis medium and correspondingly short residence times in the vessel, it is advantageous to use an active cooling, thereby using a coolant that flows through the heat transfer elements. This ensures that liquid contained in the product gas is entirely condensed on the heat transfer elements. For example, the coolant can be water or a water-glycol mixture.

According to one embodiment of the apparatus, the heat transfer elements comprise cooling tubes through which the coolant can flow, and comprise fins arranged in a stack, with the cooling tubes extending at least partially through recesses in the fins.

This arrangement adds a passive cooling element (fins) to the active cooling provided by the cooling tubes, thus maximizing or optimizing the surface area available for cooling.

In this context, the term "fin" is to be understood as a surface-enlarging element for the heat exchange device, whereby a "fin" has a substantially greater length in two directions of expansion of a Cartesian coordinate system (for example, x-y-direction) than in the third direction of expansion (for example, z-direction). Instead of the term "fin", which is a technically common term in regards of heat exchanger applications, the term rib, blade or lamella can also be used.

The fins are arranged in a stack, which means in this context that they are arranged parallel to each other or are arranged substantially parallel to each other. The parallel arrangement is such that the fins are spaced apart from one another, which means they do not touch among each other in the parallel arrangement.

According to one embodiment of the apparatus, the cooling tubes extend perpendicular to a main expansion direction of the fins.

According to one embodiment of the apparatus, the heat exchanger device comprises feeding and discharging tubes for feeding the coolant to the cooling tubes and discharging the coolant from the cooling tubes, wherein the feeding and/or discharging tubes merge into the cooling tubes, and the feeding and discharging tubes are at least in part arranged perpendicular to the cooling tubes and are at least in part arranged parallel to the main expansion direction of the fins.

This arrangement makes it possible, particularly in a vertically arranged apparatus according to the invention, to provide a particularly large number of active and passive cooling elements with optimum utilization of the volume available for cooling in the vessel, in particular in an upper part of the vessel.

According to one embodiment of the apparatus, in particular a vertically arranged apparatus, the cooling tubes are arranged horizontally, and the fins arranged in a stack are arranged vertically, so that components which can condense on the cooling tubes and/or fins are at least partially returned by the effect of gravity from the gas phase part of the vessel to the liquid phase part of the vessel.

Due to the horizontal arrangement of the cooling tubes and the vertical arrangement of the fins, the recirculation of liquid condensed from the product gas to the liquid phase part of the vessel is facilitated or accelerated, respectively, and thus made particularly effective. The fins act as vertically arranged guide plates for the returning liquid, so that the gravitational force can be utilized particularly well for this purpose.

According to one embodiment of the apparatus, the fins arranged in a stack are spaced apart from each other such that a minimum distance is defined between two adjacent fins, wherein said minimum distance is dimensioned such that no capillary forces can occur between adjacent fins such that a condensable liquid, in particular water, cannot rise upward between two adjacent fins against the action of gravity.

By defining a minimum distance between two adjacent fins and avoiding capillary forces, it is also ensured that condensable liquid is not trapped between two adjacent fins. Said trapping of liquid would reduce the effective heat exchange surface and thus the efficiency of the heat exchanger device in general.

By arranging the fins of the stack according to the aforementioned spacing, on the one hand it is ensured that the liquid can flow freely downwards, and on the other hand this allows the maximum possible number of fins to be arranged in the heat exchanger device. This further maximizes the cooling capacity of the apparatus.

The distance selected between the parallel arranged fins depends on the physical properties of the liquid, i.e. the vaporizable portion of the electrolytic medium. In particular, this depends on the surface tension of the respective liquid, as well as other boundary conditions such as the pressure and temperature in the vessel.

According to one embodiment of the apparatus, the minimum distance between two adjacent fins is 0,5 to 20 mm, preferably 0,5 to 5 mm, more preferred 0,5 to 3 mm, further preferred 1 to 2,5 mm, in particular 2 mm.

According to one embodiment of the apparatus, the minimum distance is the actual distance between two adjacent fins.

According to one embodiment of the apparatus, the inlet for the supply of the electrolysis medium loaded with product gas to the interior of the vessel is arranged in the region of the gas phase part, so that the electrolysis medium loaded with product gas can flow freely into the gas phase part of the vessel.

This measure also maximizes the residence time of the electrolysis medium loaded with product gas in the liquid phase part of the vessel, which means that the degassing of the electrolysis medium can be done particularly effective.

According to one embodiment of the apparatus, the outlet for discharging the degassed electrolysis medium from the interior of the vessel is arranged in the sump region of the vessel.

According to one embodiment of the apparatus, one or more baffles are arranged in the gas phase part of the vessel, in particular in an edge region of the vessel, so that product gas separated from the loaded electrolysis medium is subjected to a forced flow, thereby contacting the heat transfer elements of the heat exchanger device.

The arrangement of baffles in an edge region of the vessel ensures that liquid-containing product gas does not flow over the edge area, i.e. the inner wall of the vessel, as far as possible. Instead, the product gas is forced to flow through the central area of the vessel, as a result of which the entire flowing product gas quantity flows over the heat transfer elements of the heat exchanger device.

Hence, preferably, the baffles are connected to an inner surface of the wall of the vessel.

According to one embodiment of the apparatus, the apparatus comprises a further heat exchanger device comprising heat transfer elements, wherein the heat transfer elements of said further heat exchanger device are disposed within the liquid phase part of the vessel.

Wherein the heat exchanger device disposed within the gas phase part of the vessel is dedicated to cooling the product gas to condense liquid entrained in the product gas, the further or second heat exchanger device disposed within the liquid phase part of the vessel is dedicated to the temperature management of the electrolysis medium. That is, the further heat exchanger device heats up or cools down the electrolysis medium depending on the process requirements. Thereby, a further temperature control device which sets the temperature of the electrolysis medium before it enters the electrolysis cell stack, and which is arranged downstream of the apparatus and upstream of the electrolysis cell stack of an electrolyser, can optionally be omitted.

Hence, according to one embodiment of the apparatus, the heat transfer elements of the further heat exchanger device are configured for either cooling or heating the electrolysis medium within the liquid phase part of the vessel.

Regardless of the aforementioned advantage, the further heat exchanger device has the advantage of increasing turbulence in the electrolysis medium loaded with product gas in the liquid phase part of the vessel. This improves degassing and thus reduces the risk of gas bubble entrainment to the circulation pumps arranged downstream of the apparatus.

Furthermore, considering small electrolyser units, heat losses in the electrolyser system may be high compared to large units. Heating of the electrolysis medium within the apparatus may be advantageous in particular in said small electrolyser units.

According to one embodiment of the apparatus, the heat transfer elements of the further heat exchanger device are configured so that a coolant can flow through them, for indirectly cooling of the electrolysis medium within the liquid phase part of the vessel, and wherein the further heat exchanger device has a coolant inlet extending through a wall of the vessel and a coolant outlet extending through the wall of the vessel.

According to one embodiment of the apparatus, the heat transfer elements of the further heat exchanger device comprise cooling tubes through which the coolant can flow.

Furthermore, at least one of the underlying problems is at least partially solved by an electrolysis arrangement, comprising the following components which are in fluid connection with one another:
- An electrolysis cell stack comprising a plurality of electrolysis cells for the electrochemical generation of product gases from a liquid electrolysis medium, wherein the electrolysis cell stack comprises an anode section for the generation of a first product gas and a cathode section for the generation of a second product gas;
- at least one combined gas-liquid separator and gas cooling device, comprising the apparatus according to any one of the aforementioned embodiments, wherein said device is arranged downstream of the electrolysis cell stack on an anode and/or cathode side of the electrolysis arrangement;
- a direct current source to supply direct current to the electrolysis cell stack;
- at least one circulation pump to circulate the liquid electrolysis medium between the electrolysis cell stack and the combined gas-liquid separator and gas cooling device;
- optionally, a temperature control device arranged downstream of the combined gas-liquid separator and gas cooling device, and arranged upstream of the electrolysis cell stack, configured to set a target temperature of a product gas depleted electrolysis medium withdrawn from the combined gas-liquid separator and gas cooling device before the product gas depleted electrolysis medium is supplied to the electrolysis cell stack.

The term "electrolysis arrangement" may also be understood to mean an "electrolysis assembly", an "electrolyser", or an "electrolysis system", which are synonymous terms for the same or at least similar subject matter.

The electrolysis arrangement according to the invention comprises at least one combined gas-liquid separator and gas cooling device, which comprises the apparatus according to the invention. The at least one combined gas-liquid separator and gas cooling device is arranged downstream of the electrolysis cell stack on an anode and/or cathode side of the electrolysis arrangement. According to one embodiment, one combined gas-liquid separator and gas cooling device is arranged downstream of the electrolysis cell stack on an anode side of the electrolysis arrangement, and one combined gas-liquid separator and gas cooling device is arranged downstream of the electrolysis cell stack on an cathode side of the electrolysis arrangement.

Optionally, a temperature control device is arranged downstream of the combined gas-liquid separator and gas cooling device, and arranged upstream of the electrolysis cell stack. This temperature control device can particularly be omitted in case the apparatus according to the invention comprises a further heat exchanger device comprising heat transfer elements, wherein the heat transfer elements of said further heat exchanger device are disposed within the liquid phase part of the vessel.

According to one embodiment of the electrolysis arrangement, the heat transfer elements of the further heat exchanger device are configured for either cooling or heating the electrolysis medium within the liquid phase part of the vessel.

According to one embodiment of the electrolysis arrangement, the electrolysis arrangement does not comprise a (dedicated) heat exchanger device arranged downstream of the combined gas-liquid separator and gas cooling device.

According to one embodiment of the electrolysis arrangement, the electrolysis arrangement does not comprise a (dedicated) gas-liquid separator device arranged downstream of the combined gas-liquid separator and gas cooling device.

As the electrolysis arrangement comprises the apparatus according to the invention, which combines the functions of separating the product gas from the product gas loaded electrolysis medium, and drying the separated product gas, a dedicated heat exchanger device arranged downstream of the combined gas-liquid separator and gas cooling device and/or a dedicated gas-liquid separator device arranged downstream of the combined gas-liquid separator and gas cooling device can be omitted. In general, the electrolysis arrangement according to the invention does not comprise a (dedicated) heat exchanger device and/or a (dedicated) gas-liquid separator device on its cathode side and/or anode side.

Furthermore, at least one of the underlying problems is at least partially solved by the use of the apparatus according to the invention and/or the electrolysis arrangement according to the invention for the production of Hydrogen from a water containing electrolysis medium. In particular, the water containing electrolysis medium is deionised water and the electrolysis arrangement is of the proton exchange membrane (PEM) electrolysis type. In particular, the water containing electrolysis medium is concentrated aqueous potassium hydroxide (KOH) solution and the electrolysis arrangement is of the alkaline electrolysis type.

### Detailed description of an exemplary embodiment

The invention will now be detailed by way of an exemplary embodiment with reference to the attached drawings. Unless otherwise stated, the drawings are not necessarily to scale. In the figure and the accompanying description, equivalent elements are each provided with the same reference marks.

In the drawings
- Figure 1: depicts a perspective view of an apparatus 1 according to the invention,
- Figure 2: depicts a front view of the heat exchanger device 8, which is part of the apparatus 1 according to the invention,
- Figure 3: depicts a side view of the heat exchanger device 8, which is part of the apparatus 1 according to the invention,
- Figure 4: depicts a perspective view of the heat exchanger device 8, which is part of the apparatus 1 according to the invention, and
- Figure 5: depicts a simplified block flow chart of an electrolysis arrangement 36, which comprises an apparatus 1 according to the invention on its anode side and on its cathode side.

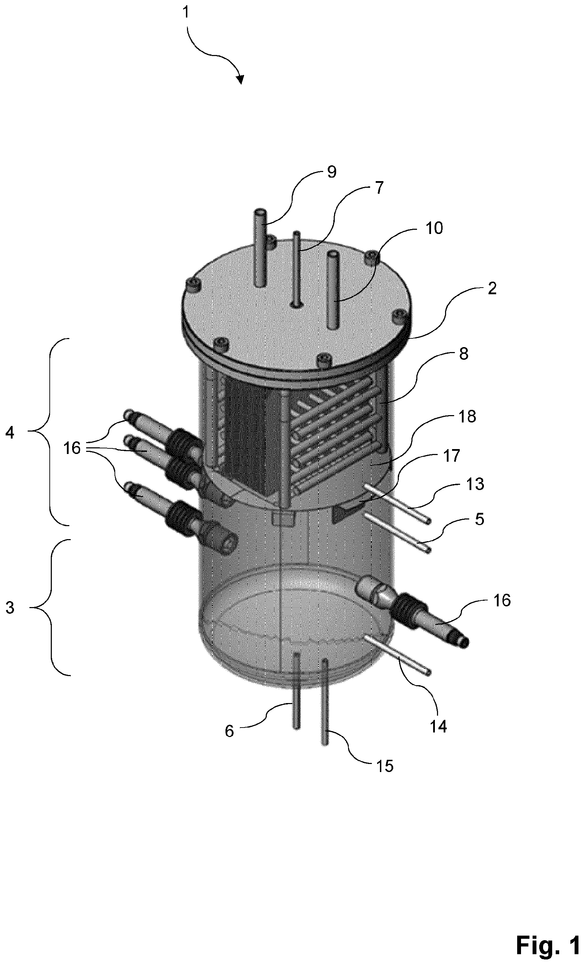

The apparatus 1 as shown in Figure 1 is arranged vertically and comprises a vessel 2, which defines in its interior in a lower area a liquid phase part 3 and in an upper area a gas phase part 4. The liquid phase part 3 and the gas phase part 4 are immediately adjacent to each other, which means that free mass- and heat-exchange between the liquid phase part 3 and the gas phase 4 is possible. The liquid phase part 3 is configured to separate product gas from an electrolysis medium which is loaded with said product gas, and which can be supplied to the apparatus 1 via inlet 5.

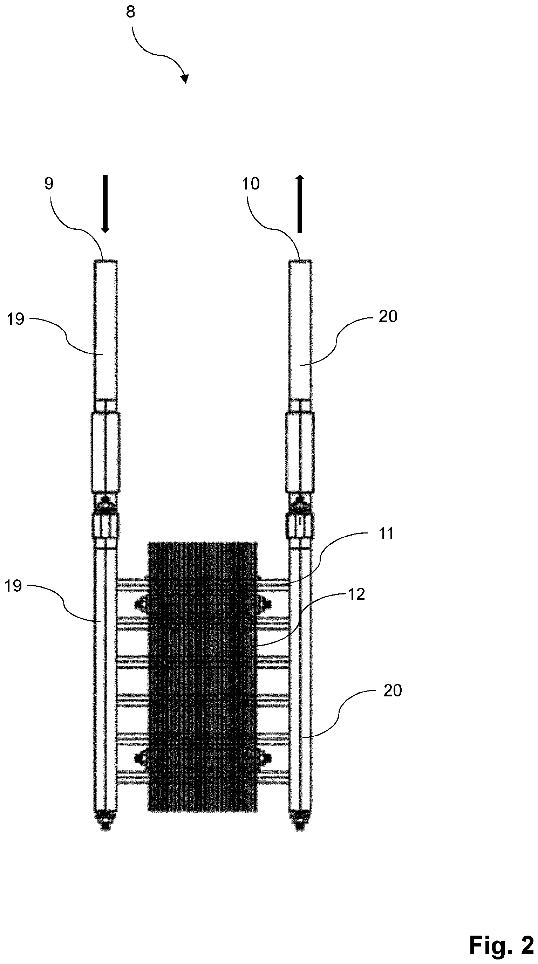

Product gas which is separated from the loaded electrolysis medium within the liquid phase part 3 of the vessel 2 rises upwards and enters the gas phase part 4 of the vessel. The uprising product gas contains liquid from the electrolysis medium which is entrained in the product gas. Within the gas phase part 4 of the vessel 2, a heat exchanger device 8 comprising heat transfer elements is disposed. The heat transfer elements will be described in detail further below with the aid of Figures 2 to 4. The heat exchanger device 8 is attached to the inner wall of the vessel 2 by means of a supporting base 18, which comprises a square opening to allow access to the heat transfer elements of the heat exchanger device 8. Baffles 17 are arranged in an edge region of the gas phase part 3 of the vessel 2, whereby the baffles 17 are attached to said edge region either via the inner wall of the vessel 2 or via the supporting base 18 of the heat exchanger device 8. In particular the supporting base 18, but also baffles 17 ensure that the product gas preferably flows along the heat transfer elements of the heat exchanger device 8, so that said heat exchanger elements cannot be bypassed by the product gas.

The heat transfer elements of heat exchanger device 8 are configured so that a coolant can flow through them. The coolant is supplied to the heat exchanger device 8 by means of coolant inlet 9. The heated or "used" coolant is discharged from the heat exchanger device 8 via coolant outlet 10. The coolant inlet 9 and the coolant outlet 10 extend through an upper wall of the vessel 2, thereby fluidly connecting the exterior of the apparatus 1 with the interior of the heat transfer elements of the heat exchanger device 8. The upper wall of the vessel is connected to a cylindrical housing wall of the vessel by a flange connection. The cylindrical housing wall is only partially shown in the figure for the purpose of making the interior of the apparatus 1, respectively the interior of the vessel 8, visible.

Liquid entrained in the uprising product gas is condensed at the surface of the heat transfer elements of the heat exchanger device 8. Thereby, the condensed liquid can flow back to the liquid phase part 3 of the vessel by means of gravity. Hence, condensed liquid is directly returned to the electrolysis medium, without e.g. heat loss which would occur within a pipe. Product gas depleted electrolysis medium, i.e. degassed electrolysis medium is discharged from the vessel 2 of the apparatus 1 via outlet 6 and returned to an electrolysis cell stack for further generation of product gas by means of the electrochemical reaction occurring in the electrolysis cells. Apparatus 1 also comprises in its sump region a sampling port 15 to take samples in order to determine the residual concentration of product gas in the electrolysis medium in the sump area of the liquid phase part 3 of vessel 2.

Apparatus 1 further comprises an inlet for inert gas 13, which serves to inert apparatus 1, for example while the electrolysis arrangement comprising the apparatus 1 is operated in stand-by mode.

Furthermore, the apparatus 1 has an inlet 14, which serves to supply consumed electrolysis medium (e.g. water in the case of a PEM electrolysis), or to supply the part of the electrolysis medium that is consumed in the electrochemical reaction in the electrolysis cells (e.g. water in the case of an alkaline electrolysis).

The product gas, at least partially depleted of entrained liquid by means of cooling and condensation at the heat transfer elements within the gas phase part 4 of the vessel 2, can be discharged from the apparatus 1 via an outlet 7 and is subsequently fed to a further processing step. For example in the case of hydrogen as the product gas, the dried hydrogen is fed to an oxygen removal step by means of a catalytic conversion of oxygen to water and subsequent absorption of the water formed in an absorber bed containing a molecular sieve.

The apparatus 1 further comprises liquid level measurement connectors 16 to control and regulate the liquid level in the liquid phase part 3 of the vessel 2.

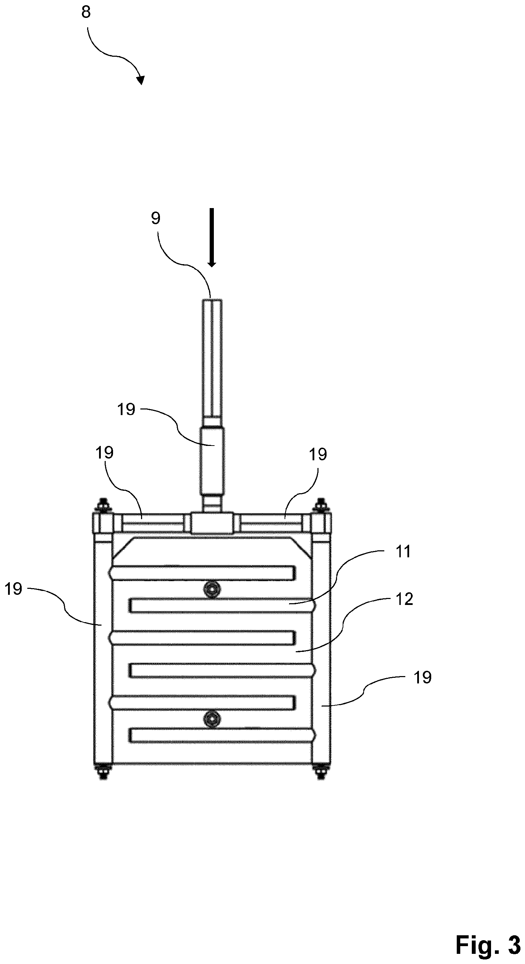

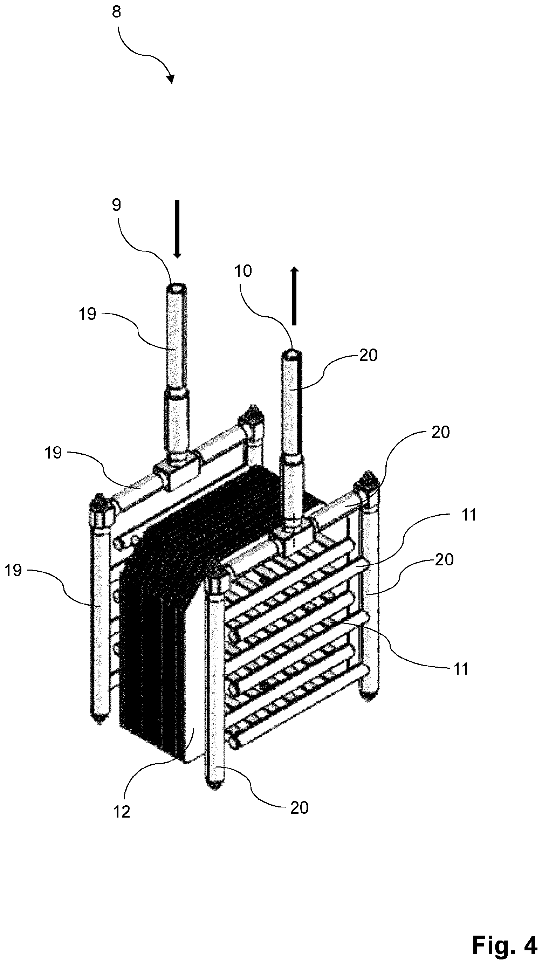

Figures 2, 3 and 4 show in detail a front view (Figure 2), a side view (Figure 3) and a perspective view (Figure 4) of the heat exchanger device 8 arranged within the gas phase part 4 of the vessel 2 of the apparatus 1. The vertical arranged heat exchanger device 8 comprises a system of feeding tubes 19, which has the inlet 9 for feeding coolant to the feeding tubes 19. The feeding tubes 19 are arranged partly vertical and partly horizontal and merge into each other. Furthermore, the vertical arranged heat exchanger device 8 comprises a system of discharging tubes 20, which has the outlet 10 for discharging coolant from the discharging tubes 20. The discharging tubes 20 are arranged partly vertical and partly horizontal and merge into each other.

The heat exchanger device 8 further comprises a system of cooling tubes 11, which are arranged horizontally and merge into the lower part of the vertically arranged feeding tubes 19 and discharging tubes 20. The feeding tubes 19 are configured to feed the coolant to the cooling tubes 11, whilst the discharging tubes 20 are configured to discharge the coolant from the cooling tubes 11. The heat exchanger device further comprises a plurality of fins 12, which are arranged in a stack and wherein within the stack, adjacent fins are spaced apart from each other. The cooling tubes 11 extend partially through recesses in the fins 12. The cooling tubes 11 and the fins 12 form the heat transfer elements of the heat exchanger device 8. The cooling tubes 11 expand horizontally, whilst the fins 12 expand vertically in their main expansion direction. Hence, the cooling tubes 11 expand perpendicular to the main expansion direction of the fins 12. Due to the horizontal arrangement of the cooling tubes 11 and vertical arrangement of the fins 12, condensable components which condense on the surface of the cooling tubes and/or fins are returned by the effect of gravity from the gas phase part 4 of the vessel 2 to the liquid phase part 3 of the vessel 2. Preferably, the fins 12 are spaced apart from each other such that a minimum distance is defined between two adjacent fins 12, wherein said minimum distance is dimensioned such that no capillary forces can occur between adjacent fins such that a condensable liquid, in particular water, cannot rise upwards between two adjacent fins against the action of gravity. On the one hand, this provides the maximum possible heat transfer surface, and on the other hand, it ensures rapid drainage of the condensed liquid by avoiding the trapping of condensed liquid between two adjacent fins. Trapped liquid between two adjacent fins would cover parts of the surface of the heat exchanger device and thus reduce the overall efficiency of the heat exchanger device.

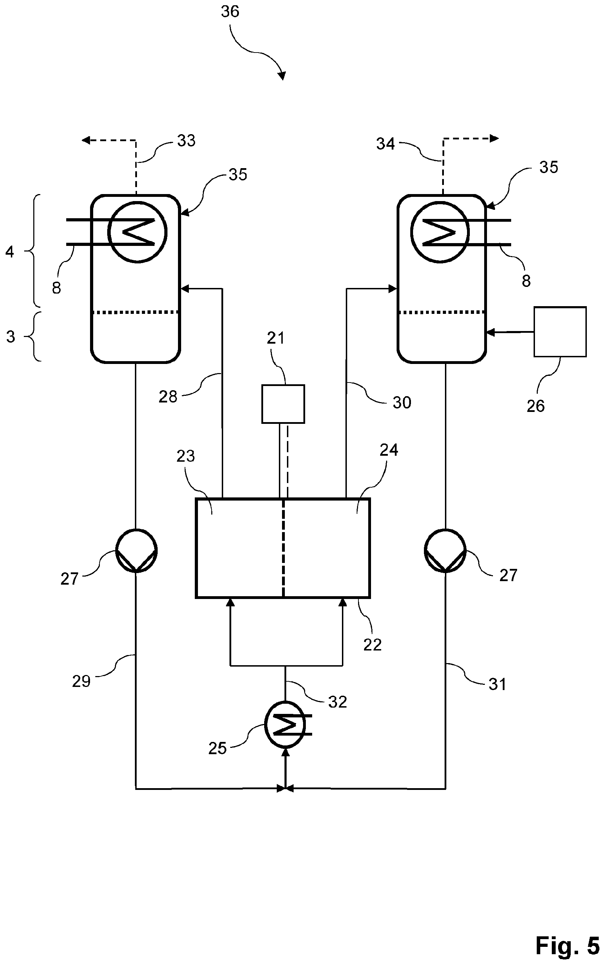

Figure 5 shows a simplified block flow diagram for an electrolysis arrangement 36 according to the invention. According to the example of Figure 5, the electrolysis arrangement 36 is configured to perform an alkaline water electrolysis to produce oxygen and hydrogen as the product gases. The electrolysis arrangement comprises an electrolysis cell stack 22, which is supplied with direct current (indicated by the combined solid and dashed line) by means of a direct current source 21. The electrolysis cell stack 22 comprises an anode section 23 and a cathode section 24. For the sake of simplification, the anode section 23 and the cathode section 24 are shown as one cell, but actually comprise a plurality of cells. In the electrolysis cell stack 22, product gases are generated from the liquid electrolysis medium, which is a concentrated (e.g. 3 mol/l) aqueous potassium hydroxide solution. Oxygen is generated on the anode side 23 of the electrolysis cell stack 22 and hydrogen is generated on the cathode side 24 of the electrolysis cell stack 22 from the water contained in the liquid electrolysis medium. A product gas loaded anolyte stream 28 is withdrawn from the anode section 23 of the electrolysis cell stack and a product gas loaded catholyte stream 30 is withdrawn from the cathode section 24 of the electrolysis cell stack 22. In the example of Figure 5, stream 28 is an oxygen loaded anolyte stream and stream 30 is a hydrogen loaded catholyte stream. Streams 28 and 30 are two-phase system, containing the gaseous product gas and the liquid electrolysis medium.

The electrolysis arrangement 36 further comprises on its anode side and cathode side a combined gas-liquid separator and gas cooling device 35. The combined gas-liquid separator and gas cooling devices 35 each comprise an apparatus 1 with a vessel 2 as described in detail above. Hence, the combined gas-liquid separator and gas cooling devices 35 each comprise a lower liquid phase part 3, an upper gas phase part 4 and a heat exchanger device 8. As described for a general case in detail above, the product gases oxygen and hydrogen are separated from the liquid electrolysis medium of the loaded anolyte stream 28 and the loaded catholyte stream 30 in the combined gas-liquid separator and gas cooling devices 35 respectively. At the same time, the separated product gases are dried by means of the heat exchanger devices 8 arranged within the gas phase parts of the devices 35 by means of condensation of liquid entrained in the respective product gas, and said condensed liquid flows back to the liquid phase part 3 of the respective device 35. Hence, a dried oxygen stream 33 is withdrawn from the device 35 on the anode side of the electrolysis arrangement 36, and a dried hydrogen stream 34 is withdrawn from the device 35 on the cathode side of the electrolysis arrangement 36. Hence, no dedicated heat exchanger and no dedicated separator arranged downstream of the respective device 35 is required.

The product gas-loaded streams 28 and 30 are introduced into the device 35 via an inlet in the gas phase part 4 of the respective device 35. This allows the gas loaded stream to flow freely into the device 35. The streams depleted in product gases, i.e. on the anode side the anolyte stream 29 depleted in oxygen and on the cathode side the catholyte stream 31 depleted in hydrogen, are on the other hand withdrawn from the respective devices 35 in the sump area within the liquid phase part 3 of the devices 35. This maximizes the residence time for the electrolysis medium in the respective device 35 and thus makes the separation of the product gas as efficient as possible.

The electrolysis arrangement 36 also comprises a circulation pump 27 on the anode side and the cathode side of the arrangement 36 respectively. The circulation pumps circulate the loaded and depleted electrolysis media between the electrolysis cell stack 22 and the respective devices 35.

Downstream of the devices 35, the oxygen depleted anolyte stream 29 and the hydrogen depleted catholyte stream 31 are merged to a mixed electrolyte stream 32. This compensates for concentration differences in the lye concentration of the anolyte stream 29 and the catholyte stream 31. These concentration differences result solely from the stoichiometrically different consumption of water on the cathode and anode sides of such a system.

The mixed electrolyte stream 32 is heated or cooled, depending on the process conditions and the operating mode of the electrolysis arrangement 36, to a target temperature determined for the electrolysis medium at the inlet of the electrolysis cell stack 22 by means of a temperature control device 25. The temperature controlled mixed electrolyte stream is afterwards equally split and supplied to the anode section 23 and the cathode section 24 of the electrolysis cell stack 22 respectively.

In case that the devices 35 comprise a temperature control device within their liquid phase part 3 as described more in detail above, the temperature control device 25 can optionally be omitted.

The electrolysis arrangement 36 further comprises a water supply 26, to supply water to the electrolysis arrangement 36 via the combined gas-liquid separator and gas cooling device 35 on the cathode side of the arrangement 36. The purpose of the water supply 26 is to supply the arrangement 36 with the amount of water per unit of time that is consumed per unit of time by the electrochemical reaction in the electrolysis cell stack 22.

### List of reference signs

- 1: apparatus
- 2: vessel
- 3: liquid phase part
- 4: gas phase part
- 5: inlet for loaded electrolysis medium
- 6: outlet for degassed electrolysis medium
- 7: outlet for separated product gas
- 8: heat exchanger device with heat transfer elements
- 9: coolant inlet
- 10: coolant outlet
- 11: cooling tubes
- 12: fins arranged in a stack
- 13: inlet for inert gas
- 14: inlet for supply of electrolysis medium
- 15: sampling port
- 16: liquid level measurement connector
- 17: baffle
- 18: supporting base with square opening
- 19: feeding tube
- 20: discharging tube
- 21: direct current source
- 22: electrolysis cell stack
- 23: anode section of electrolysis cell stack
- 24: cathode section of electrolysis cell stack
- 25: temperature control device
- 26: water supply
- 27: circulation pump
- 28: oxygen loaded anolyte stream
- 29: oxygen depleted anolyte stream
- 30: hydrogen loaded catholyte stream
- 31: hydrogen depleted catholyte stream
- 32: mixed electrolyte stream
- 33: oxygen stream
- 34: hydrogen stream
- 35: combined gas-liquid separator and gas cooling device
- 36: electrolysis arrangement

## Claims

1. Apparatus (1) for separating a product gas from an electrolysis medium, and for drying the product gas separated from the electrolysis medium, comprising
- a vessel (2), defining in its interior a liquid phase part (3) and a gas phase part (4), whereby
the liquid phase part and the gas phase part are immediately adjacent to each other, wherein
the liquid phase part is configured to separate the product gas (33, 34) from the electrolysis medium loaded with product gas, to obtain a degassed electrolysis medium (29, 31), and wherein
the gas phase part is configured to dry the product gas separated from the electrolysis medium;
- an inlet (5) for the supply of the electrolysis medium loaded with product gas to the interior of the vessel;
- an outlet (6) for discharging the degassed electrolysis medium from the interior of the vessel;
- an outlet (7) for discharging the separated product gas from the interior of the vessel;
- a heat exchanger device (8) comprising heat transfer elements (11, 12) disposed within the gas phase part of the vessel, the heat transfer elements being configured for cooling of the product gas separated from the electrolysis medium to effect condensation of condensable components contained in the separated product gas.

2. Apparatus according to claim 1, wherein the heat transfer elements of the heat exchanger device are configured so that a coolant can flow through them, for indirectly cooling of the product gas separated from the electrolysis medium, and wherein the heat exchanger device has a coolant inlet (9) extending through a wall of the vessel and a coolant outlet (10) extending through the wall of the vessel.

3. Apparatus according to claim 2, wherein the heat transfer elements comprise cooling tubes (11) through which the coolant can flow, and comprise fins (12) arranged in a stack, with the cooling tubes extending at least partially through recesses in the fins.

4. Apparatus according to claim 3, wherein the cooling tubes extend perpendicular to a main expansion direction of the fins.

5. Apparatus according to claim 3 or claim 4, wherein the heat exchanger device comprises feeding and discharging tubes (19, 20) for feeding the coolant to the cooling tubes and discharging the coolant from the cooling tubes, wherein the feeding and/or discharging tubes merge into the cooling tubes, and the feeding and discharging tubes are at least in part arranged perpendicular to the cooling tubes and are at least in part arranged parallel to the main expansion direction of the fins.

6. Apparatus according to any one of claims 3 to 5, wherein the cooling tubes are arranged horizontally, and the fins arranged in a stack are arranged vertically, so that components which can condense on the cooling tubes and/or fins are at least partially returned by the effect of gravity from the gas phase part of the vessel to the liquid phase part of the vessel.

7. Apparatus according to any one of claims 3 to 6, wherein the fins arranged in a stack are spaced apart from each other such that a minimum distance is defined between two adjacent fins, wherein said minimum distance is dimensioned such that no capillary forces can occur between adjacent fins such that a condensable liquid, in particular water, cannot rise upward between two adjacent fins against the action of gravity .

8. Apparatus according to any one of the preceding claims, wherein the inlet for the supply of the electrolysis medium loaded with product gas to the interior of the vessel is arranged in the region of the gas phase part, so that the electrolysis medium loaded with product gas can flow freely into the gas phase part of the vessel.

9. Apparatus according to any one of the preceding claims, wherein the outlet for discharging the degassed electrolysis medium from the interior of the vessel is arranged in the sump region of the vessel.

10. Apparatus according to one of the preceding claims, wherein one or more baffles (17) are arranged in the gas phase part of the vessel, in particular in an edge region of the vessel, so that product gas separated from the loaded electrolysis medium is subjected to a forced flow, thereby contacting the heat transfer elements of the heat exchanger device.

11. The apparatus of claim 10, wherein the baffles are connected to an inner surface of the wall of the vessel.

12. The apparatus according to any one of the preceding claims, wherein the apparatus comprises a further heat exchanger device comprising heat transfer elements, wherein the heat transfer elements of said further heat exchanger device are disposed within the liquid phase part of the vessel.

13. The apparatus according to claim 12, wherein the heat transfer elements of the further heat exchanger device are configured for either cooling or heating the electrolysis medium within the liquid phase part of the vessel.

14. Electrolysis arrangement (36), comprising the following components which are in fluid connection with one another:
- An electrolysis cell stack (22) comprising a plurality of electrolysis cells for the electrochemical generation of product gases from a liquid electrolysis medium, wherein the electrolysis cell stack comprises an anode section (23) for the generation of a first product gas and a cathode section (24) for the generation of a second product gas;
- at least one combined gas-liquid separator and gas cooling device (35), comprising the apparatus (1) according to any one of the preceding claims, wherein said device is arranged downstream of the electrolysis cell stack on an anode and/or cathode side of the electrolysis arrangement;
- a direct current source (21) to supply direct current to the electrolysis cell stack;
- at least one circulation pump (27) to circulate the liquid electrolysis medium (27, 28, 30, 31) between the electrolysis cell stack and the combined gas-liquid separator and gas cooling device;
- optionally, a temperature control device (25) arranged downstream of the combined gas-liquid separator and gas cooling device, and arranged upstream of the electrolysis cell stack, configured to set a target temperature of a product gas depleted electrolysis medium withdrawn from the combined gas-liquid separator and gas cooling device before the product gas depleted electrolysis medium is supplied to the electrolysis cell stack.

15. Electrolysis arrangement according to claim 14, wherein the electrolysis arrangement does not comprise a heat exchanger device arranged downstream of the combined gas-liquid separator and gas cooling device.

16. Electrolysis arrangement according to claim 14 or claim 15, wherein the electrolysis arrangement does not comprise a gas-liquid separator device arranged downstream of the combined gas-liquid separator and gas cooling device.

17. Use of the apparatus according to any one of claims 1 to 13 and/or the electrolysis arrangement according to any one of claims 14 to 16 for the production of Hydrogen from a water containing electrolysis medium.
